# EUROPEAN PATENT APPLICATION

(11) **EP 4 606 691 A1**
(43) Date of publication of application: **27.08.2025**
(21) Application number: 25153755.1
(22) Date of filing: 24.01.2025
(51) Int. Cl.: B63H 1/20, B24C 1/10, B63H 1/26, B63H 1/28, B64C 11/20

(54) **PROPELLER HAVING ROUGH SURFACES ON BLADES AND METHOD FOR MAKING THE SAME**

(30) Priority: 06.02.2024 US 202463550231 P
(71) Applicant: Solas Science & Engineering Co., Ltd., Taichung City 407 (TW)
(72) Inventor: LIN, Yeun-Junn, 407 TAICHUNG CITY (TW)
(74) Representative: Straus, Alexander

(57) **Abstract**

A method for making a propeller (1) includes the steps of casting a propeller member that includes a hub (2) and blades (3) extending from the hub (2), treating the propeller member by a coarse sandblasting and then a fine sandblasting, and shot peening surfaces of the blades (3) and the hub (2) of the propeller member by stainless-steel balls to enhance fatigue strength of the blades.

## Description

### BACKGROUND OF THE INVENTION

### 1. Field of the Invention

The present invention relates generally to a propeller and more particularly, to a propeller having rough surfaces on blades and a method for making the same. The propeller thus made has dual effects of enhanced fatigue strength and lowered production cost.

### 2. Description of the Related Art

Conventional marine propellers are generally made by a plurality of processing steps, including casting, coarse sandblasting, several stages of fine sandblasting, and subsequent cloth wheel polishing, to achieve smooth surfaces on the blades.

However, the manufacturing process required to achieve the smooth surfaces on the propeller involves multiple and complicated steps, resulting in low production efficiency and long production time. Moreover, after operating for a certain period, the smooth surfaces of the propeller may experience fatigue failure, thereby shortening the lifespan of the propeller. In other words, there is still room for improvement in conventional marine propellers.

### SUMMARY OF THE INVENTION

The present invention has been accomplished in view of the above-noted circumstances. It is an objective of the present invention to provide a marine propeller, wherein the blades of the propeller are made having rough surfaces, reducing the need for multiple sandblasting and polishing processes required in prior arts, lowering the production cost of the propeller, and enhancing the fatigue strength of the blades.

To attain the above objective, the present invention provides a method for making a propeller, involving in treating a cast propeller member by a coarse sandblasting and then a fine sandblasting, followed by a shot peening process to create rough surfaces on blades. This increases the surface roughness of the blades, enhances fatigue strength of the blades by more than 30%, reduces the need for multiple sandblasting and polishing processes as needed in prior arts, and lowers the production cost of the propeller.

The detailed structure, features, assembly, and usage of the propeller and method of making the same provided by the present invention will be described in detail in the following embodiments. However, those skilled in the art will understand that the specific embodiments and descriptions are intended to illustrate the invention and are not meant to limit the scope of the patent claims.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective view of a propeller having rough surfaces on blades in accordance with a preferred embodiment of the present invention;
FIG. 2 is a block diagram of a method of making the propeller in accordance with the preferred embodiment of the present invention;

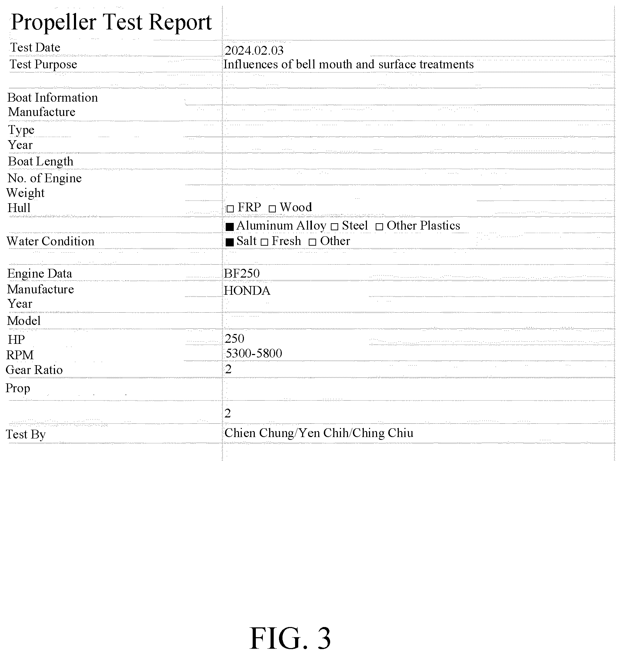

FIG. 3 shows a test report for the propeller of the preferred embodiment of the present invention; and

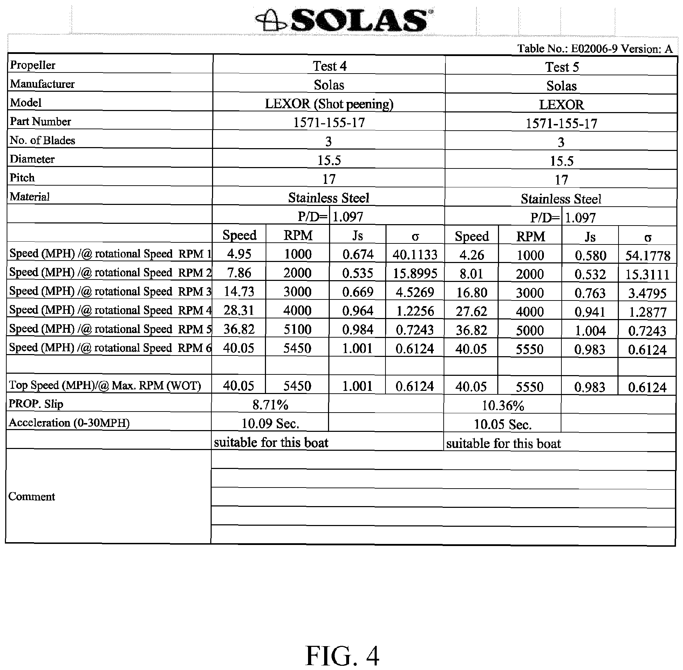

FIG. 4 shows another test report, wherein Test 4 is subject to a propeller made by the method of the preferred embodiment of the present invention, and Test 5 corresponds to a propeller made by conventional polishing processes of a prior art.

### DETAILED DESCRIPTION OF THE INVENTION

It is to be firstly mentioned that the technical features provided by the present invention are not limited to the specific structures, usages, and applications described in the embodiments. The terminology used in the description is illustrative and intended for those skilled in the art to understand. Directional descriptive terms such as 'front, top, bottom, rear, left, right, top, bottom, inner, and outer' mentioned in this specification are also illustrative terms based on the normal usage orientation and are not intended to limit the scope of the claims.

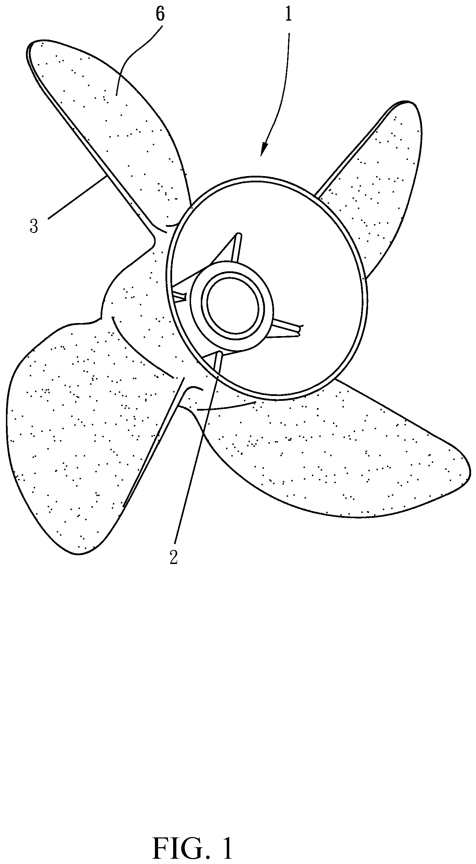

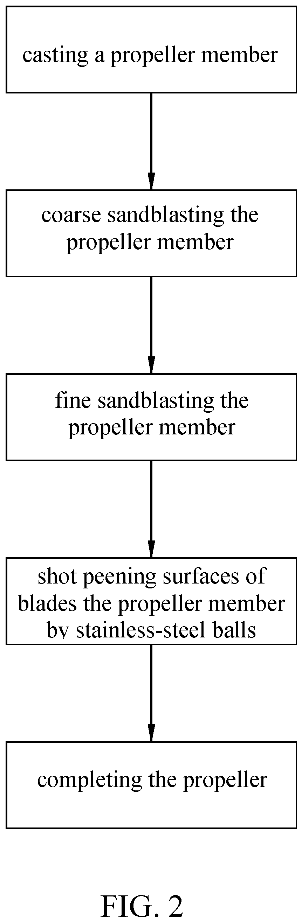

According to a preferred embodiment, the present invention provides a method of making a propeller 1 composed of a hub 2 and a plurality of blades 3 extending from the hub 2, as shown in FIG. 1. As shown in FIG. 2, the method involves the steps of a) casting a propeller member that includes a hub and a plurality of blades extending from the hub, b) treating the propeller member by a coarse sandblasting, c) treating the propeller member by a fine sandblasting, d) performing shot peening to surfaces of the blades and the hub of the propeller member by high-speed and high-pressure stainless-steel balls having dimeter of 0.3-0.5 mm to generate noticeable rough surfaces 6 on the blades and the hub to enhance the fatigue strength of the blades, and thereafter e) completing a propeller 1 as shown in FIG. 1. The propeller 1 thus obtained may have enhanced fatigue strength by over 30%. By utilizing this manufacturing method of the present invention, the need for multiple sandblasting and polishing steps needed in conventional processing may be minimized, thereby lowering production costs. In the shot peening step, the stainless-steel balls hit the surfaces of the blades 3 and the hub 2 in various directions, causing indentations and protrusions on the surfaces of the blades 3 and the hub 2. Optionally, a polishing step of using a fine grinding wheel may be further carried out to smoothen the surfaces of the blades 3 and the hub 2 that have been treated by the shot peening step.

The surfaces of the blades treated through the method of the present invention differs from the surfaces of the conventionally polished propeller. The surfaces produced by the method of the present invention feels smooth to the touch, and upon magnification, the surfaces exhibit a textured pattern of indentations, which looks like a shark skin. For the shot peening, the processing conditions, such as size, speed, pressure of the stainless-steel balls, are not specially limited as long as the surfaces of the blades thus obtained may have a surface roughness Ra ranging from 3.0 to 4.0. Compared to the propeller made by conventional polishing processing and having a surface roughness Ra generally ranging from 0.1 to 0.2, the propeller 1 of the present invention has a relatively larger surface roughness due to tiny indentations provided on the surfaces of the blades. Although the relatively rougher surface may theoretically lead to a thicker boundary layer and higher drag, the textured, indented surfaces suppress vortex formation in the wake, thereby reducing drag. Results of a real ship test show that the propeller 1 made by the method of the present invention and the propeller made by conventional polishing processing have no difference in top speed therebetween.

## Claims

1. A propeller (1), comprising a hub (2) and a plurality of blades (3) extending from the hub (2), the propeller (1) being **characterized in that** the blades (3) have rough surfaces (6) with indentations formed by external forces.

2. The propeller (1) as claimed in claim 1, **characterized in that** the surfaces (6) of the blades (3) have a surface roughness (Ra) ranging from 3.0 to 4.0.

3. A method for making a propeller (1), characterized comprising the steps of:
casting a propeller member that includes a hub (2) and a plurality of blades (3) extending from the hub (2);
surface treating the propeller member by a coarse sandblasting and then a fine sandblasting; and
shot peening surfaces of the blades (3) and the hub (2) of the propeller member by stainless-steel balls to enhance fatigue strength of the blades (3).

4. The method as claimed in claim 3, **characterized in that** the surfaces (6) of the blades have a surface roughness (Ra) ranging from 3.0 to 4.0.

5. The method as claimed in claim 3, characterized further comprising a step of polishing the surfaces (6) of the blades (3) and the hub (3) that have been treated by the shot peening.

6. The method as claimed in claim 3, **characterized in that** the stainless-steel balls have a dimeter ranging from 0.3 mm to 0.5 mm.
